# EUROPEAN PATENT APPLICATION

(11) **EP 4 641 797 A1**
(43) Date of publication of application: **29.10.2025**
(21) Application number: 23907599.7
(22) Date of filing: 14.12.2023
(51) Int. Cl.: H01M 50/291, H01M 50/204, H01M 10/613, H01M 10/655, H01M 10/6568

(54) **BATTERY CASE**

(30) Priority: 21.12.2022 KR 20220180821
(71) Applicant: POSCO Co., Ltd, Pohang-si, Gyeongsangbuk-do 37859 (KR)
(72) Inventor: KIM, Hwi-Geon, Incheon 21985 (KR); LEE, Hong-Woo, Incheon 21985 (KR); LEE, Gyu-Min, Incheon 21985 (KR); KIM, Jaehyun, Incheon 21985 (KR)
(74) Representative: Meissner Bolte Partnerschaft mbB
(86) International application number: PCT/KR2023/020686
(87) International publication number: WO 2024/136313

(57) **Abstract**

The present invention provides a battery case comprising: a side wall portion installed to surround side surfaces of a reception space; and stacked modules each having a battery module received therein, the multiple stacked modules being stacked and installed in a height direction in the reception space, wherein the stacked modules include: a first stacked module connected to the side wall portion and installed to block the lower portion of the reception space; and at least one second stacked module disposed at the upper side of the first stacked module.

## Description

### Technical Field

The present disclosure relates to a battery case for an electric vehicle.

### Background Art

It should be noted that the contents described in this section simply provide background information on the present disclosure and do not constitute prior art.

As the popularization of electric vehicles using batteries is accelerating, the development and production of vehicles having various sizes are expanding.

In large electric vehicles with large vehicle body sizes, a driving distance may inevitably be short compared to battery capacity due to heavy weight, and the need for a high-capacity battery pack to solve this problem is increasing.

Generally, an internal space of an electric vehicle battery pack has a structure in which a number of length-directional members and a number of width-directional members are provided and structured to protect a battery, making it difficult to use a large amount of batteries.

### (Patent Document 1) KR 10-1939617 B1

### Summary of Invention

### Technical Problem

The present disclosure, as one aspect, seeks to provide a high-capacity battery case capable of securing an additional battery loading space.

### Solution to Problem

In order to achieve the above-mentioned purposes, the present disclosure provides a battery case including a side wall portion installed to surround a side surface of a reception space; and a stack module receiving a battery module and installed to be stacked in plural in the reception space in a height direction, wherein the stack module includes: a first stack module connected to the side wall portion and installed to block a lower portion of the reception space; and a second stack module at least one of which is disposed on an upper side of the first stack module.

The first stack module may include a first bottom portion connected to the side wall portion and installed to block the lower portion of the reception space; and a first lower width-directional member connected to the first bottom portion, extending in a width direction across the reception space, and installed in plural spaced apart in a length direction, and wherein the first lower width-directional member may be welded to the first bottom portion.

The first stack module may further include a first length-directional member extending across the reception space in the length direction and installed to cover the plurality of first lower width-directional members, and wherein the first length-directional member may be welded to the first bottom portion and the plurality of first lower width-directional members.

The side wall portion may be welded to the first bottom portion, the first lower width-directional member, and the first length-directional member, respectively.

The battery case may further include a first cooling panel portion installed on an upper side of the first lower width-directional member and cooling the battery module received in the reception space.

The first lower width-directional member may include a 1-1 lower width-directional member having a first installation groove formed to be inserted from the upper portion for installing the first cooling panel portion; and a 1-2 lower width-directional member disposed between adjacent first lower width-directional members in the length direction and having an upper end portion having a height, equal to or less than a height of a lower end portion of the first cooling panel portion.

The battery case may further include a first upper width-directional member disposed on an upper side of the first cooling panel portion and coupled to the 1-1 lower width-directional member.

The second stack module may be detachably coupled to the first stack module and the side wall portion.

The second stack module may include a second bottom portion disposed in a lower portion; and a second lower width-directional member connected to the second bottom portion, formed to extend in a width direction across the reception space, and installed in plural spaced apart in a length direction, and wherein the second lower width-directional member may be welded to the second bottom portion.

The first lower width-directional member may have a height, greater than a height of the second lower width-directional member.

The second lower width-directional member, the second bottom portion, and the first stack module may be detachably coupled in a state overlapping in the height direction.

A 2-1 lower width-directional member of the second lower width-directional member may have a hat-shaped cross-section of which a lower portion is exposed, continuously provided as a plurality of hat-shaped cross-sections, and may have a 2-1 connecting surface formed between two hat-shaped cross-sections of the plurality of hat-shaped cross-sections, and the battery case may be coupled by a bolt fastening method, in a state in which the second bottom portion overlaps to contact a lower side of the 2-1 connecting surface and an upper side of a first upper width-directional member of the first stack module overlaps to contact a lower side of the second bottom portion.

The second stack module may further include a second length-directional member formed to extend in the length direction across the reception space and installed to cover the plurality of second lower width-directional members, and wherein the second length-directional member may be welded to the second bottom portion and the plurality of second lower width-directional members.

The battery case may further include a second cooling panel portion installed on an upper side of the second lower width-directional member and cooling the battery module received in the reception space.

The second lower width-directional member may include a 2-1 lower width-directional member having a second installation groove formed to be inserted from the upper portion for installing the second cooling panel portion; and a 2-2 lower width-directional member disposed between adjacent 2-1 lower width-directional members in the length direction and having an upper end portion having a height, equal to or less than a height of a lower end portion of the second cooling panel portion.

The battery case may further include a second upper width-directional member disposed on an upper side of the second cooling panel portion and coupled to the 2-1 lower width-directional member.

The battery case may further include a module bracket portion connected to the side wall portion and detachably connected to the second stack module to support the second stack module.

The module bracket portion may include a module joint plate welded in a state overlapping the side wall portion; and a module support plate formed to extend in a direction, intersecting the module joint plate and detachably connected to a second bottom portion of the second stack module.

The battery case may further include a mount frame coupled to the side wall portion and disposed outside the reception space to form a coupled portion with a vehicle body, and wherein the mount frame may be disposed in a position corresponding to the first stack module in the height direction.

The mount frame may be entirely installed to surround a side surface of the side wall portion.

### Advantageous Effects of Invention

According to an embodiment of the present disclosure, there may be an effect of securing an additional battery loading space to configure a high-capacity battery case.

### Brief Description of Drawings

FIG. 1 is a perspective view of an exploded state of a battery case according to an embodiment of the present disclosure.
FIG. 2 is a perspective view of a side wall portion and a mount frame of the battery case of FIG. 1.
FIG. 3 is a perspective view of a first stack module of the battery case of FIG. 1.
FIG. 4 is a perspective view illustrating a state in which the components of FIGS. 2 and 3 are coupled.
FIG. 5A is a cross-sectional view of FIG. 4, taken along line I-I'.
FIG. 5B is a cross-sectional view of FIG. 4, taken along line II-II'.
FIG. 6 is a perspective view illustrating a state in which a first cooling panel portion is additionally installed in FIG. 4.
FIG. 7 is a perspective view illustrating a state in which a first upper width-directional member is additionally installed in FIG. 6.
FIG. 8A is a perspective view illustrating a state in which a battery module is additionally installed in FIG. 7.
FIG. 8B is a view illustrating a detail of portion 'A' of FIG. 8A.
FIG. 9 is a perspective view of a second stack module of the battery case of FIG. 1.
FIG. 10 is a perspective view illustrating a state in which the components of FIGS. 8A and 9 are coupled.
FIG. 11 is a cross-sectional view of FIG. 10, taken along line III-III'.
FIG. 12 is a perspective view illustrating a state in which a second cooling panel portion is additionally installed in FIG. 10.
FIG. 13 is a perspective view illustrating a state in which a second upper width-directional member is additionally installed in FIG. 12.
FIG. 14 is a perspective view illustrating a state in which a battery module is additionally installed in FIG. 13.

### Best Mode for Invention

Hereinafter, preferred embodiments of the present disclosure will be described with reference to the attached drawings. However, embodiments of the present disclosure may be modified in various other forms, and the scope of the present disclosure is not limited to embodiments described below. In addition, embodiments of the present disclosure may be provided to more completely explain the present disclosure to a person having average knowledge in the relevant technical field. Shapes and sizes of elements in the drawings may be exaggerated for a clearer description.

Hereinafter, an X-axis illustrated in the attached drawing may be a length direction of a battery case, a Y-axis may be a width direction of the battery case, and a Z-axis may be a height direction of the battery case.

For example, an X-axis, which is a length direction of a battery case, may be a front-back direction, which may be a length direction of a vehicle body, and a Y-axis, which is a width direction of the battery case, may be a left-right direction, which may be a width direction of the vehicle body.

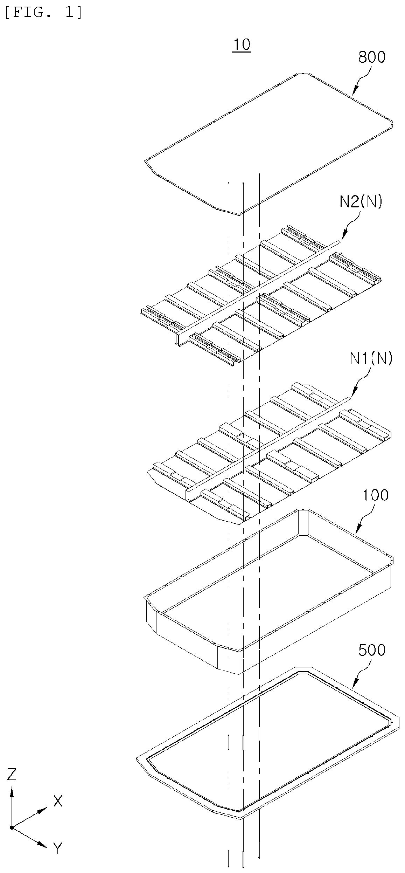

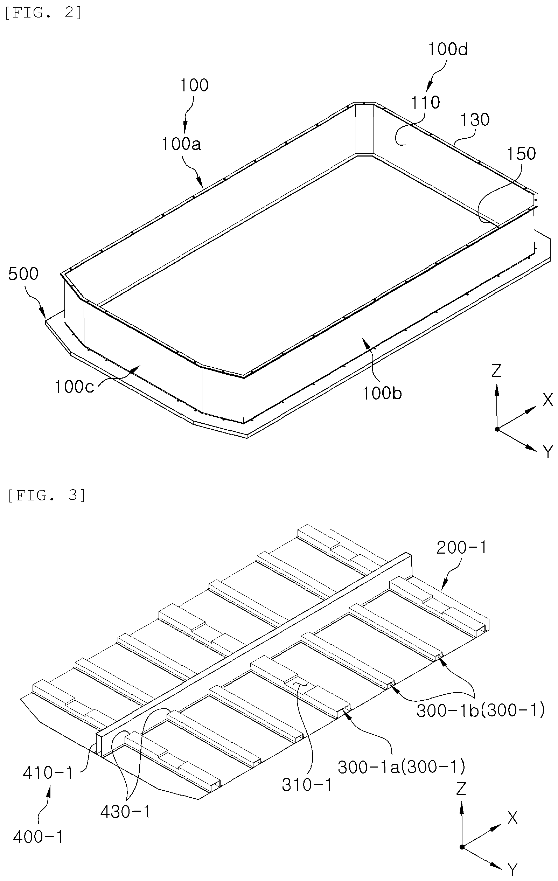

Hereinafter, components included in a battery case 10 according to an embodiment of the present disclosure will be specifically described with reference to FIGS. 1 and 2.

FIG. 1 is a perspective view of an exploded state of a battery case 10 according to an embodiment of the present disclosure, and FIG. 2 is a perspective view of a side wall portion 100 and a mount frame 500 of the battery case 10 of FIG. 1.

A battery case 10 according to an embodiment of the present disclosure may include a side wall portion 100 and a stack module N, and the stack module N may include a first stack module N1 and a second stack module N2.

The side wall portion 100 may be installed to surround a side surface of a reception space S.

A plurality of battery modules M may be received in the reception space S. The battery module M may include a plurality of battery cells M1.

The side wall portion 100 may include a side panel 110 and a lower flange 150.

The side panel 110 may be installed to block the side surface of the reception space S. The side panel 110 may be configured as a plate-shaped member extending in a longitudinal direction, and may be installed to surround the side surface of the reception space S.

The lower flange 150 may be connected to a lower area of the side panel 110, and may form a coupled portion with a first bottom portion 200-1 of the first stack module N1. The lower flange 150 may be coupled to the first bottom portion 200-1 in a state overlapping the first bottom portion 200-1. The lower flange 150 may be configured as a plate-shaped member extending in a transverse direction. For example, the lower flange 150 may be configured as a tetragonal ring-shaped member entirely installed over the lower area of the side panel 110.

The side wall portion 100 may further include an upper flange 130.

The upper flange 130 may be connected to an upper area of the side panel 110, and may form a coupled portion with a floor C1 of a vehicle body or an upper cover (not illustrated) of the battery case 10.

The side wall portion 100 may have a first side wall portion 100a and a second side wall portion 100b, disposed oppositely in the width direction (Y) with the reception space S therebetween, and a first lower width-directional member 300-1 may be installed across the first side wall portion 100a and the second side wall portion 100b.

One end portion of the first lower width-directional member 300-1 in the width direction (Y) may be disposed to be in contact with the first side wall portion 100a, and the other end portion of the first lower width-directional member 300-1 in the width direction (Y) may be disposed to be in contact with the second side wall portion 100b. The first lower width-directional member 300-1 may be welded to the first side wall portion 100a and the second side wall portion 100b, respectively, in both end portions in the width direction (Y). A lower portion of the first lower width-directional member 300-1 may be welded to the first bottom portion 200-1.

The first lower width-directional member 300-1 may be installed to connect the first side wall portion 100a and the second side wall portion 100b. Therefore, the first lower width-directional member 300-1 may support a load transmitted in the width direction (Y) between the first side wall portion 100a and the second side wall portion 100b. The first lower width-directional member 300-1 may stably support a width direction (Y) load transmitted from a mount frame 500 or the like.

The stack module N may receive a battery module M, and a plurality of stack modules N may be stacked and installed in the reception space S in the height direction (Z).

The plurality of stack modules N may be stacked in the height direction (Z) to receive a larger number of battery modules M in the reception space S. The battery module M may include the plurality of battery cells M1.

The reception space S may receive the plurality of battery modules M in the length direction (X) or width direction (Y). For example, the plurality of battery modules M may be received in the length direction (X), width direction (Y), and height direction (Z) in the reception space S.

The first stack module N1 may be installed to block a lower portion of the reception space S by being connected to the side wall portion 100. At least one second stack module N2 may be disposed on an upper side of the first stack module N1.

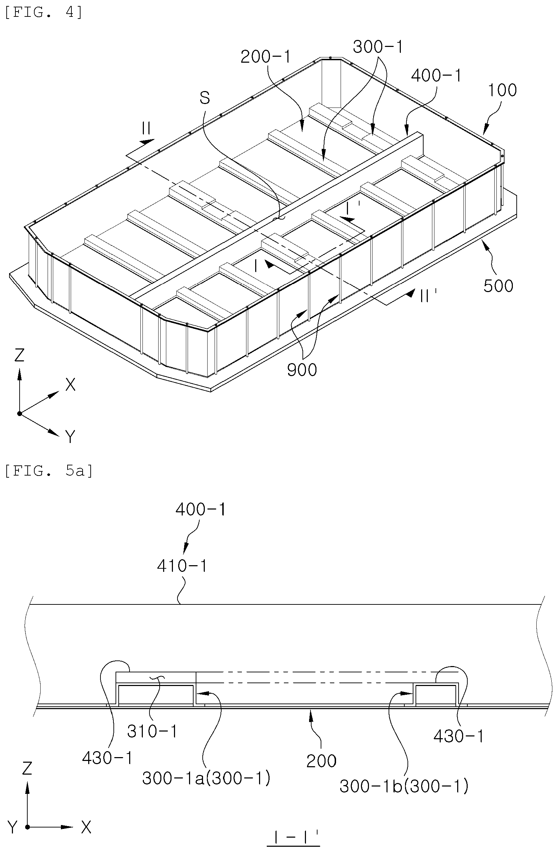

FIG. 3 is a perspective view of a first stack module N1 of the battery case 10 of FIG. 1, and FIG. 4 is a perspective view illustrating a state in which the components of FIGS. 2 and 3 are coupled.

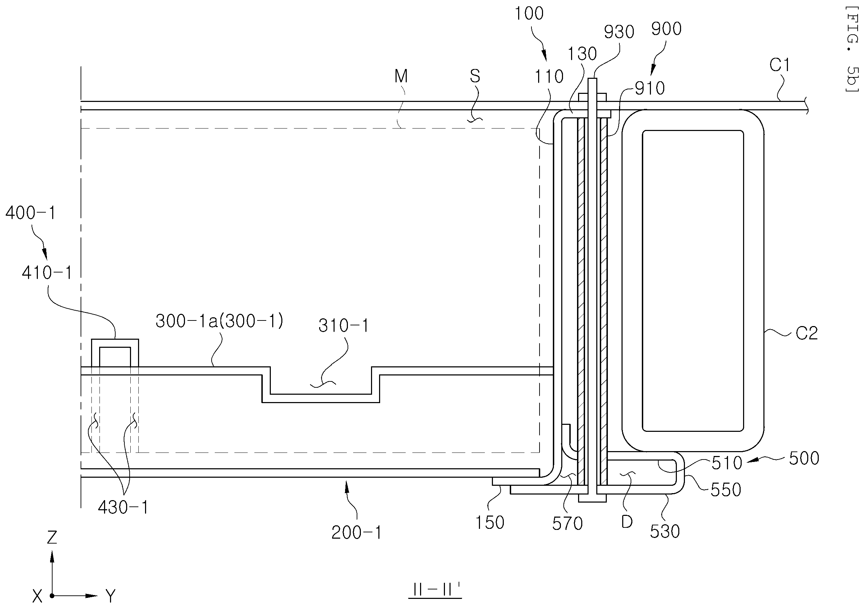

FIG. 5A is a cross-sectional view of FIG. 4, taken along line I-I', and FIG. 5B is a cross-sectional view of FIG. 4, taken along line II-II'.

The first stack module N1 may include a first bottom portion 200-1 and a first lower width-directional member 300-1.

The first bottom portion 200-1 may be connected to the side wall portion 100, and may be installed to block the lower portion of the reception space S. For example, the first bottom portion 200-1 may be composed of a metal plate such as a steel plate or the like. The side wall portion 100 may block the side surface of the reception space S, the first bottom portion 200-1 may block a lower surface of the reception space S, and an upper portion of the reception space S of the battery case 10 may be exposed.

For example, the side wall portion 100 and the first bottom portion 200-1 may be composed of a metal material such as a steel material or the like, and the side wall portion 100 and the first bottom portion 200-1 may be joined by a welding method.

The first bottom portion 200-1 and the side wall portion 100 may be manufactured separately and then coupled to each other. When the first bottom portion 200-1 and the side wall portion 100 are manufactured separately, the first bottom portion 200-1 and the side wall portion 100 may have an overlapping portion overlapping each other. For example, the overlapping portion should be watertight, and may be completely sealed by arc welding. As another example, the overlapping portion may be sealed by sealing, and assembly strength may be secured by spot welding.

The first lower width-directional member 300-1 may be connected to the first bottom portion 200-1, may be formed to extend in the width direction (Y) across the reception space S, and may be installed as a plurality of first lower width-directional members 300-1 spaced apart in the length direction (X). The first lower width-directional member 300-1 may be welded to the first bottom portion 200-1.

The first lower width-directional member 300-1 may have a hat-shaped cross-section of which a lower portion is exposed, and may be coupled to the first bottom portion 200-1 on a lower side, to form a closed cross-sectional portion, together with the first bottom portion 200-1.

The first lower width-directional member 300-1 may be located corresponding to the mount frame 500 with the side wall portion 100 therebetween, and may support a load transferred from the mount frame 500. That is, the first lower width-directional member 300-1 may form a load transfer path with the mount frame 500 in the width direction (Y).

The first stack module N1 may further include a first length-directional member 400-1.

The first length-directional member 400-1 may be formed to extend in the length direction (X) across the reception space S, and may be installed to cover the plurality of first lower width-directional members 300-1. The first length-directional member 400-1 may be welded to the first bottom portion 200-1 and the plurality of first lower width-directional members 300-1.

The first length-directional member 400-1 may connect the plurality of first lower width-directional members 300-1 spaced apart in the length direction (X). The first length-directional member 400-1 may be connected to intersect the first lower width-directional members 300-1.

The first length-directional member 400-1 may be welded to each of the plurality of first lower width-directional members 300-1. The first length-directional member 400-1 may be welded to the first bottom portion 200-1. The first length-directional member 400-1 may be welded to the first bottom portion 200-1 and the plurality of first lower width-directional members 300-1, respectively.

The first length-directional member 400-1 may be installed across a front wall portion 100c and a rear wall portion 100d of the side wall portion 100. One end portion of the first length-directional member 400-1 in the length direction (X) may be disposed to be in contact with the front wall portion 100c, and the other end portion of the first length-directional member 400-1 in the length direction (X) may be disposed to be in contact with the rear wall portion 100d. Therefore, the front wall portion 100c and the rear wall portion 100d may be installed to be connected to each other.

The side wall portion 100, the first bottom portion 200-1, the first lower width-directional member 300-1, and the first length-directional member 400-1 may be composed of a metal material such as a steel material or the like.

The first lower width-directional member 300-1 may ensure continuity of cross-sections in the width direction (Y). Specifically, the first lower width-directional member 300-1 may have a constant cross-section in the width direction (Y). The first lower width-directional member 300-1 may have some changes in cross-section in a first installation groove 310-1 described later, but in a remaining section, continuity of cross-sections may be guaranteed while constant cross-sections are continuous between the first side wall portion 100a and the second side wall portion 100b.

The first length-directional member 400-1 may be installed to cover the plurality of first lower width-directional members 300-1, and continuity of cross-sections of the first lower width-directional member 300-1 may be guaranteed in the width direction (Y), thereby stably supporting a load applied in the width direction (Y), thereby increasing structural rigidity of a lower portion of the battery case 10.

The first length-directional member 400-1 may include a first length-directional main body 410-1 and a first lower insertion groove 430-1.

The first length-directional main body 410-1 may be formed to extend in the length direction (X), and may be installed to cover upper portions of the plurality of first lower width-directional members 300-1.

The first length-directional main body 410-1 may have a hat-shaped cross-section of which a lower portion is exposed, and may be coupled to the first bottom portion 200-1 on a lower side, to form a closed cross-sectional portion, together with the first bottom portion 200-1, in a portion in which the first lower width-directional member 300-1 is not installed. For example, in the first length-directional main body 410-1, the lower side may be welded to the first bottom portion 200-1.

The first length-directional main body 410-1 may be welded to the first bottom portion 200-1 and the plurality of first lower width-directional members 300-1, respectively.

The first lower insertion groove 430-1 may be formed by inserting from a lower portion to an upper portion of the first length-directional main body 410-1, and the first lower width-directional member 300-1 may be inserted.

The first lower insertion groove 430-1 may be configured in a shape corresponding to an outer surface of the first lower width-directional member 300-1. In a state in which the first lower width-directional member 300-1 is inserted into the first lower insertion groove 430-1, a lower side of the first lower width-directional member 300-1 may be in contact with the first bottom portion 200-1, and an upper side of the first lower width-directional member 300-1 may be in contact with an upper side of the first lower insertion groove 430-1.

Of course, the first lower insertion groove 430-1 and the first lower width-directional member 300-1 may not be in contact in some sections.

The first length-directional member 400-1 may be welded to the first bottom portion 200-1 on a lower side, and may be welded to the first lower width-directional member 300-1 around the first lower insertion groove 430-1. The first lower width-directional member 300-1 may be inserted into the first lower insertion groove 430-1, and the first length-directional member 400-1 and the width-directional member may be welded to each other while the first lower width-directional member 300-1 may be in close contact with the first lower insertion groove 430-1.

The side wall portion 100 may be welded to the first bottom portion 200-1, the plurality of first lower width-directional members 300-1, and the first length-directional member 400-1, respectively.

The side wall portion 100 may be welded to the first bottom portion 200-1 along an entire circumference. The side wall portion 100 may be welded to end portions of both sides of the first lower width-directional member 300-1 in the width direction (Y). The side wall portion 100 may be welded to end portions of both sides of the first length-directional member 400-1 in the length direction (X).

Therefore, the side wall portion 100 may be welded to the first bottom portion 200-1, the plurality of first lower width-directed members 300-1, and the first length-directional member 400-1, respectively, to secure a frame in the lower portion of the battery case 10, thereby increasing structural rigidity of the lower portion of the battery case 10 and suppressing overall deformation of the battery case 10.

The upper portion of the reception space S may be blocked, while the side wall portion 100 is coupled to the floor C1 of the vehicle body or the upper cover (not illustrated) of the battery case 10 on the upper side.

For example, the upper portion of the reception space S may be blocked, while the side wall portion 100 is coupled to the floor C1 of the vehicle body on the upper side. Since the floor C1 of the vehicle body functions as the upper cover of the battery case 10, a portion corresponding to the upper cover of the battery case 10 may be omitted, thereby achieving an effect of achieving a reduction in weight of the vehicle.

The battery case 10 may further include a sealing portion 800. The sealing portion 800 may be disposed between the upper flange 130 and the floor C1 to secure watertightness of the reception space S.

As another example, the side wall portion 100 may be connected to the upper cover (not illustrated) of the battery case 10 on the upper side.

The battery case 10 may further include a mount frame 500.

The mount frame 500 may be coupled to the side wall portion 100, and may be disposed on an outer side of the reception space S to form a connecting portion with the vehicle body. The mount frame 500 may be connected to an outer side surface of the side wall portion 100.

The mount frame 500 may be disposed in a position corresponding to the first stack module N1 in the height direction (Z). Specifically, the mount frame 500 may be disposed in a portion corresponding to the first lower width-directional member 300-1 of the first stack module N1 in the height direction (Z).

The mount frame 500 may play a role in assembling the battery case 10 to the body and maintaining assembly rigidity and strength. For example, the mount frame 500 may be joined to the side wall portion 100 by a welding method.

A vehicle body frame C2 may be coupled to a lower side of the floor C1 of the vehicle body, and the vehicle body frame C2 may be coupled to the mount frame 500. For example, the mount frame 500 and the vehicle body frame C2 may be detachably coupled by a bolt fastening method.

In an event of a side collision of the vehicle body in the width direction (Y), the mount frame 500 and the vehicle body frame C2 may play a role in ultimately protecting the battery case 10.

The mount frame 500, the side wall portion 100, and the first lower width-directional member 300-1 may be sequentially disposed in the width direction (Y). The side wall portion 100 may be disposed behind the mount frame 500, and the first lower width-directional member 300-1 may be disposed behind the side wall portion 100, to stably support the mount frame 500 by the side wall portion 100 and the first lower width-directional member 300-1, in an event of a side collision of the vehicle body.

A mechanical fastening portion 900 may detachably connect the mount frame 500, the side wall portion 100, and the floor C1. A bolt fastening method or the like may be applied to the mechanical fastening portion 900 to be detached. A plurality of mechanical fastening portions 900 may be installed at a predetermined interval.

The mechanical fastening portion 900 may include a sleeve member 910 and a long bolt member 930.

The sleeve member 910 may be formed to extend in the vertical direction (Z) to support a space between the upper flange 130 and the mount frame 500. An upper end of the sleeve member 910 may be in contact with the upper flange 130 of the side wall portion 100, and a lower end of the sleeve member 910 may be in contact with the mount frame 500. The sleeve member 910 may be configured as a cylindrical member, and the long bolt member 930 may be installed through the same.

The long bolt member 930 may be installed through the sleeve member 910, and may detachably fix the floor C1, the upper flange 130, and the mount frame 500.

The long bolt member 930 may be inserted from a lower portion to an upper portion of the mount frame 500, and may be coupled thereto. The long bolt member 930 may fix the floor C1, the upper flange 130, and the mount frame 500, while being fastened to a nut member joined to the upper surface of the floor C1.

The upper end of the sleeve member 910 may be disposed to be in contact with a lower surface of the upper flange 130, and the lower end of the sleeve member 910 may be disposed to be in contact with an upper surface of a lower plate 530 of the mount frame 500.

The mount frame 500 may be entirely installed to surround a side surface of the side wall portion 100. The mount frame 500 may be coupled to an outer side of the side surface of the side wall portion 100.

The mount frame 500 may be composed as a member having a substantially tetragonal ring shape in plan view, and the side wall portion 100 may be installed inside the tetragonal ring shape, and the mount frame 500 and the side wall portion 100 may be coupled by welding or the like.

For example, the mount frame 500 may be coupled to the side wall portion 100 and the first bottom portion 200-1 by welding or the like. As another example, the mount frame 500 may be coupled to the side wall portion 100 by welding or the like.

The mount frame 500 may be disposed in a position corresponding to the first lower width-directional member 300-1 with the side wall portion 100 interposed therebetween. The mount frame 500 may be disposed in a position corresponding to the first length-directional member 400-1 with the side wall portion 100 interposed therebetween.

The mount frame 500 may have an exposed portion 570 to which one side is exposed, and may be coupled to the side wall portion 100 to form a closed cross-sectional portion D as the exposed portion 570 is closed. The closed cross-sectional portion D may be disposed on a height corresponding to the first lower width-directional member 300-1 in the height direction (Z).

The mount frame 500 may include an upper plate 510, a lower plate 530, a side plate 550, and an exposed portion 570.

The upper plate 510 may be formed to extend in the horizontal direction, and may be joined to the side wall portion 100. One side of the upper plate 510 may be connected to an upper side of the side plate 550, and the other side of the upper plate 510 may be coupled to the side panel 110 of the side wall portion 100. The upper plate 510 may be formed with a joint flange disposed to contact the side panel 110, and the joint flange may be joined in a state overlapping the side panel 110 in the thickness direction, to secure additional joint strength.

The lower plate 530 may be formed to extend in a transverse direction, and may be disposed to be spaced apart from the upper plate 510 in longitudinal direction. One side of the lower plate 530 may be connected to the lower side of the side plate 550, and the other side of the lower plate 530 may be coupled to the first bottom portion 200-1 or the side panel 110 of the side wall portion 100.

The side plate 550 may be formed to extend in longitudinal direction to connect one side of the upper plate 510 and one side of the lower plate 530. The side plate 550 may be disposed to be spaced apart from the side panel 110 of the side wall portion 100 in a transverse direction by a predetermined interval.

The exposed portion 570 may be an exposed portion between the other side of the upper plate 510 and the other side of the lower plate 530. While the mount frame 500 is coupled to the side wall portion 100 and the exposed portion 570 is blocked by the side wall portion 100, the closed cross-section portion D may be formed.

The lower plate 530 may have a length, longer than a length of the upper plate 510 in a transverse direction, and may be coupled to the first bottom portion 200-1.

The lower plate 530 may be formed to extend in a transverse direction to the first bottom portion 200-1, and may be joined to the first bottom portion 200-1 by welding or the like. When the upper plate 510 is joined to the side panel 110 of the side wall portion 100, the lower plate 530 may be formed to extend to the first bottom portion 200-1 through a lower side of the side panel 110. For example, the first bottom portion 200-1, the lower flange 150 of the side wall portion 100, and the lower plate 530 may be coupled by welding or the like in a state overlapping each other in the thickness direction.

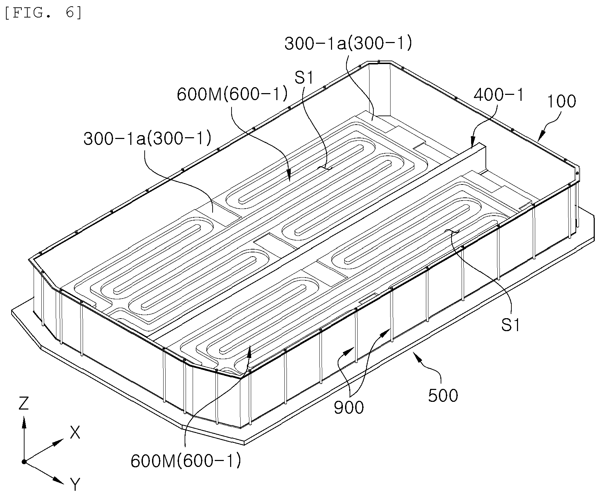

FIG. 6 is a perspective view illustrating a state in which a first cooling panel portion 600-1 is additionally installed in FIG. 4.

The battery case 10 may further include a first cooling panel portion 600-1.

The first cooling panel portion 600-1 may be installed on the upper side of the first lower width-directional member 300-1, and may cool the battery module M received in the reception space S. The battery module M may be disposed above the first cooling panel portion 600-1.

The first cooling panel portion 600-1 may be composed of a plurality of unit cooling panels 600M disposed to be spaced apart in the width direction (Y). For example, the first cooling panel portion 600-1 may be composed of two unit cooling panels 600M, and the reception space S may be divided into two cooling spaces S1.

When the first cooling panel portion 600-1 is provided as a structure entirely installed in the battery case 10 and cooling water flows entirely, there may be a problem that cooling performance is reduced due to an increase in cooling temperature loss as a cooling path increases.

By individually installing a unit cooling panel 600M in a cooling space S1, which may be a portion of the reception space S, the first cooling panel portion 600-1 may have an effect of preventing the cooling path from becoming excessively long to improve cooling performance, and an effect of reducing a size of the unit cooling panel 600M to reduce a springback phenomenon of the unit cooling panel 600M, which may occur during molding of the unit cooling panel 600M, thereby facilitating molding and assembly of the unit cooling panel 600M.

The unit cooling panel 600M may be disposed between the side wall portion 100 and the first length-directional member 400-1 in the width direction (Y). The unit cooling panel 600M may be configured as a single member installed across a plurality of width-directional members spaced apart in the length direction (X) in the reception space S.

In this specification, two unit cooling panels 600M are illustrated and described as being installed, but this is not necessarily limited thereto, and one or three or more unit cooling panels 600M may be formed.

The first lower width-directional member 300-1 may include a 1-1 lower width-directional member 300-1a and a 1-2 lower width-directional member 300-1b.

The 1-1 lower width-directional member 300-1a may have a first installation groove 310-1 formed into an upper portion for installing the first cooling panel portion 600-1. The first installation groove 310-1 may serve to secure a space in which a cooling path of the first cooling panel portion 600-1 is formed.

The 1-2 lower width-directional member 300-1b may be disposed between adjacent 1-1 lower width-directional members 300-1a in the length direction (X). A plurality of 1-2 lower width-directional members 300-1b may be disposed to be spaced apart from each other in the length direction (X) between two adjacent 1-1 lower width-directional members 300-1a. For example, two 1-2 lower width-directional members 300-1b may be disposed between two adjacent 1-1 lower width-directional members 300-1a.

The 1-2 lower width-directional member 300-1b may have an upper end portion, equal to or less than a height of a lower end portion of the first cooling panel portion 600-1. In other words, the 1-2 lower width-directional member 300-1b may not interfere with the first cooling panel portion 600-1.

Therefore, since the 1-2 lower width-directional member 300-1b may not interfere with the first cooling panel portion 600-1, installation of the 1-2 lower width-directional member 300-1b on a lower side of the first cooling panel portion 600-1 is possible to sufficiently secure rigidity of a lower portion of the battery case 10.

In the first and second lower width-directional members, both end portions in the width direction (Y) may be welded to the first side wall portion 100a and the second side wall portion 100b, respectively. In the first and second lower width-directional members, a lower portion may be welded to the first bottom portion 200-1.

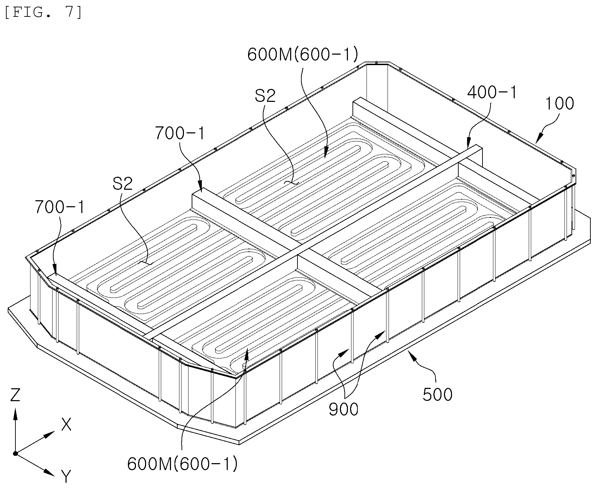

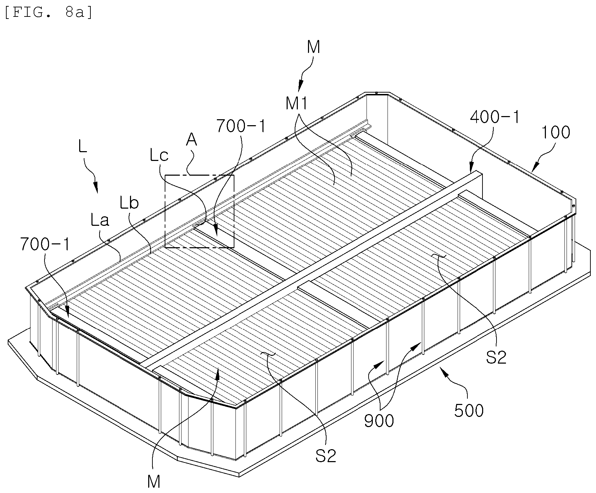

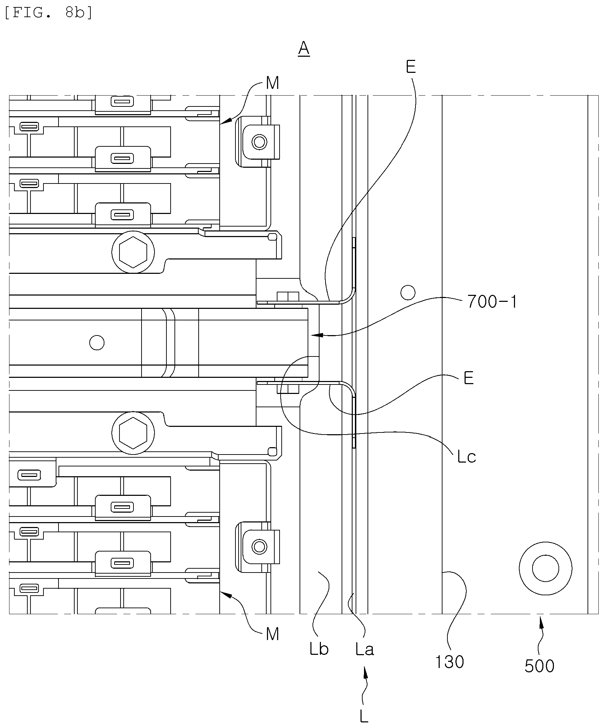

FIG. 7 is a perspective view illustrating a state in which a first upper width-directional member 700-1 is additionally installed in FIG. 6, FIG. 8A is a perspective view illustrating a state in which a battery module M is additionally installed in FIG. 7, and FIG. 8B is a view illustrating a detail of portion 'A' of FIG. 8A.

The battery case 10 may further include a first upper width-directional member 700-1.

The first upper width-directional member 700-1 may be disposed on an upper side of the first cooling panel portion 600-1, and may be coupled to the 1-1 lower width-directional member 300-1a.

The first upper width-directional member 700-1 may be formed to extend in the width direction (Y), and may connect between the side wall portion 100 and the first length-directional member 400-1. Of course, although not illustrated, when a plurality of first length-directional members 400-1 is disposed to be spaced apart in the width direction (Y), the first upper width-directional member 700-1 may connect between the side wall portion 100 and the first length-directional member 400-1, or may connect between adjacent first length-directional members 400-1.

The first upper width-directional member 700-1 may be coupled to an upper side of the 1-1 lower width-directional member 300-1a to form a closed cross-sectional portion, together with the 1-1 lower width-directional member 300-1a.

The first upper width-directional member 700-1 may be detachably coupled to the 1-1 lower width-directional member 300-1a by a bolt fastening method or the like.

The first cooling panel portion 600-1 may be disposed on an upper side of the 1-2 lower width-directional member 300-1b, and the first upper width-directional member 700-1 may not be installed on the upper side of the 1-2 lower width-directional member 300-1b.

Since the first upper width-directional member 700-1 may be installed on the upper side of the 1-1 lower width-directional member 300-1a, and may not be installed on the upper side of the 1-2 lower width-directional member 300-1b, the battery module M may be assembled and received in a compartment space S2 divided by the first length-directional member 400-1 and the first upper width-directional member 700-1 on an upper side of the first cooling panel portion 600-1. For example, the reception space S may be divided into four compartment spaces S2, and four battery modules M may be received in each of the compartment spaces S2.

The first and second lower width-directional members may be installed in the lower portion of the battery case 10 in the height direction (Z), and the first upper width-directional member 700-1 may be installed on an upper side of the lower portion of the battery case 10 in the height direction (Z).

The first and second lower width-directional members, the side wall portion 100, the mount frame 500, or the like may increase structural rigidity in the lower portion of the battery case 10 to form a strong support structure, thereby reducing the number of the first upper width-directional members 700-1 crossing the reception space S on the upper side of the lower portion of the battery case 10. Therefore, by additionally securing a space for installing a battery module M on the upper end of the lower portion of the battery case 10, more battery modules M may be installed, thereby providing an effect of configuring a high-capacity battery case 10.

Specifically, an installation area on which the first and second lower width-directional members are installed relative to an entire area of the first bottom portion 200-1, in plan view, may be referred to as a first installation area, and an installation area on which the first upper width-directional member 700-1 is installed relative to the entire area of the first bottom portion 200-1, in plan view, may be referred to as a second installation area.

Since the first upper width-directional member 700-1 may be installed on the upper side of the 1-1 lower width-directional member 300-1a and not installed on the upper side of the 1-2 lower width-directional member 300-1b, the second installation area may secure a wider space than the first installation area, allowing more battery modules M to be installed, thereby allowing a high-capacity battery case 10 to be configured.

As described above, the side wall portion 100 may increase structural rigidity of the upper portion of the battery case 10 when the floor C1 of the vehicle body is connected to an upper side. In this case, structural rigidity of the upper portion and structural rigidity of the lower portion of the battery case 10 may increase together to form a stronger support structure. The first upper width-directional member 700-1 crossing the reception space S on the upper side of the lower portion of the battery case 10 may be further reduced to have an effect of configuring a high-capacity battery case 10.

The battery case 10 may further include a module bracket portion L.

The module bracket portion L may be connected to the side wall portion 100, and may be detachably connected to the second stack module N2 to support the second stack module N2. Specifically, the module bracket portion L may support a second bottom portion 200-2 of the second stack module N2. The module bracket portion L may be welded to the side wall portion 100, and may be detachably coupled to the second bottom portion 200-2 by a bolt fastening method or the like.

For example, the module bracket portion L may be installed on the first side wall portion 100a and the second side wall portion 100b, respectively.

The module bracket portion L may include a module joint plate La and a module support plate Lb.

The module joint plate La may be welded to the side wall portion 100 in a state overlapping the side wall portion 100. The module joint plate La may be formed to extend in the length direction (X), and may be welded to the side wall portion 100.

The module support plate Lb may be formed to extend in a direction, intersecting the module joint plate La, and may be detachably coupled to the second bottom portion 200-2 of the second stack module N2. The module support plate Lb may be installed to protrude in the width direction (Y) from the side wall portion 100 toward the reception space S, and may support a lower side of the second bottom portion 200-2.

A separation groove Lc recessed toward the side wall portion 100 may be formed in the module support plate Lb. When the separation groove Lc is recessed, the first upper width-directional member 700-1 of the first stack module N1 may be assembled and disassembled without interfering with the module support plate Lb.

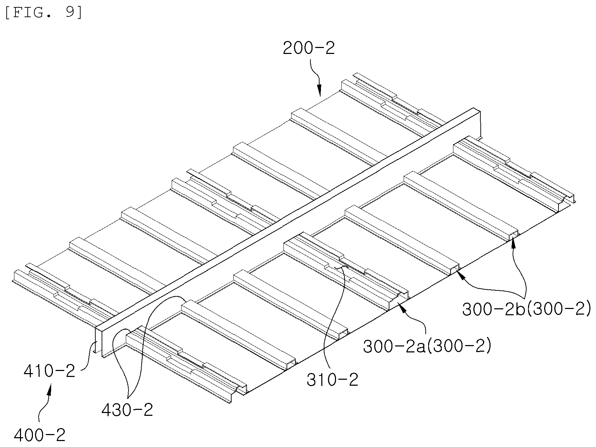

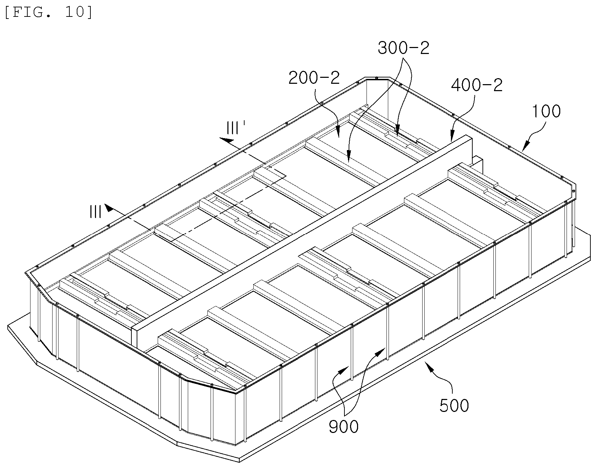

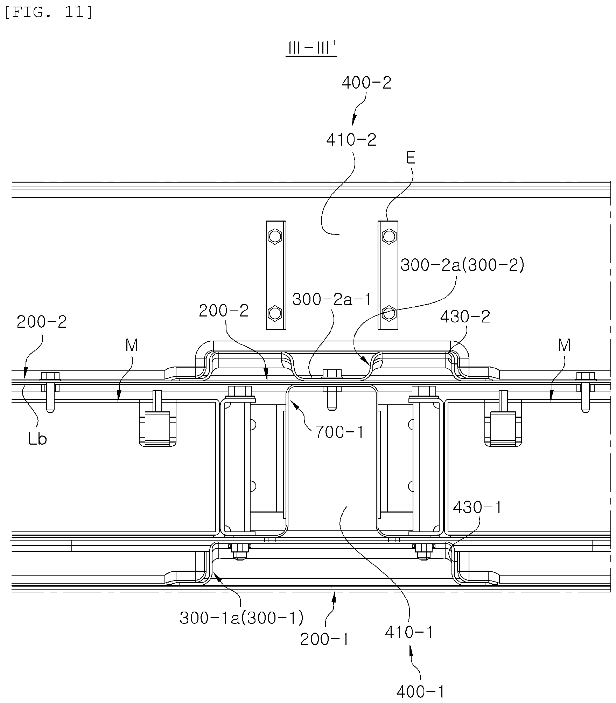

FIG. 9 is a perspective view of a second stack module N2 of the battery case 10 of FIG. 1, FIG. 10 is a perspective view illustrating a state in which the components of FIGS. 8A and 9 are coupled, and FIG. 11 is a cross-sectional view of FIG. 10, taken along line III-III'.

The second stack module N2 may be designed almost similarly to the first stack module N1. For example, the second stack module N2 may include a second bottom portion 200-2, a second lower width-directional member 300-2, a second length-directional member 400-2, a second upper width-directional member 700-2, and the like, and may correspond to the first bottom portion 200-1, the first lower width-directional member 300-1, the first length-directional member 400-1, the second upper width-directional member 700-2, and the like of the first stack module N1.

The second stack module N2 may be detachably fastened by a bolt fastening method or the like, to be assembled and disassembled with the first stack module N1 and the side wall portion 100. On the other hand, the first stack module N1 may be joined to the side wall portion 100 by welding or the like, such that some components may not be assembled and disassembled.

Specifically, in the second stack module N2, the second bottom portion 200-2, the second lower width-directional member 300-2, and the second length-directional member 400-2 may not be welded to the side wall portion 100. On the other hand, the first stack module N1 may have a difference in that the first bottom portion 200-1, the first lower width-directional member 300-1, and the first length-directional member 400-1 may be welded to the side wall portion 100.

In addition, the second length-directional member 400-2 and the second lower width-directional member 300-2 of the second stack module N2 may be partially different from the first lower width-directional member 300-1 and the first length-directional member 400-1 of the first stack module N1, in terms of specifications such as an installation length, a height, or the like.

Except for the components having differences, various embodiments of the first stack module N1 described above may be applied to remaining components of the second stack module N2. For example, the first upper width-directional member 700-1 and the second upper width-directional member 700-2 may use the same components.

Therefore, in descriptions of components of the second stack module N2, descriptions of components corresponding to the components of the first stack module N1 will be omitted to prevent duplication of content.

The second stack module N2 may be detachably coupled to the first stack module N1 and the side wall portion 100.

The second stack module N2 may be detachably coupled to the first stack module N1 by a bolt fastening method or the like, in a state disposed on the upper side of the first stack module N1. The second stack module N2 may be detachably coupled to the side wall portion 100 by a bolt fastening method or the like via the module bracket portion L. In this case, the module bracket portion L may be welded to the side wall portion 100.

The second stack module N2 may include a second bottom portion 200-2 and a second lower width-directional member 300-2.

The second bottom portion 200-2 may be disposed in a lower portion. The second bottom portion 200-2 may be installed on the upper side of the first stack module N1. The second bottom portion 200-2 may not be welded to the side wall portion 100.

The second lower width-directional member 300-2 may be connected to the second bottom portion 200-2, may extend in the width direction (Y) across the reception space S, and may be installed as a plurality of second lower width-directional members 300-2 spaced apart in the length direction (X). The second lower width-directional member 300-2 may be welded to the second bottom portion 200-2.

The second lower width-directional member 300-2 may have a shorter width in the width direction (Y) than the first lower width-directional member 300-1. For example, the second lower width-directional member 300-2 may not be coupled to the side wall portion 100.

The second lower width-directional member 300-2 may have a hat-shaped cross-section of which a lower portion is exposed, and a lower side thereof may be coupled to the second bottom portion 200-2 to form a closed cross-sectional portion, together with the second bottom portion 200-2.

The first lower width-directional member 300-1 may have a greater height than the second lower width-directional member 300-2.

This means that the first stack module N1 may be disposed on the lower side of the battery case 10, and when the first bottom portion 200-1 of the first stack module N1 may be impacted from a lower side, the first bottom portion 200-1 or the like may be deformed due to the impact applied to the first bottom portion 200-1. When the first bottom portion 200-1 or the like is deformed and penetrates into the battery module M located in an upper portion, damage to the battery module M may occur. To prevent this, the first lower width-directional member 300-1 may secure a sufficient height to secure a buffer space.

The second lower width-directional member 300-2 may have a lower height than the first lower width-directional member 300-1. The second stack module N2 may be disposed on the upper side of the first stack module N1 in the battery case 10, and there may be almost no possibility of deformation of the second bottom portion 200-2 or the like due to impact from a lower side. Therefore, by lowering a height of the second lower width-directional member 300-2 and lowering a height of the second stack module N2, an additional reception space S may be secured, thereby additionally securing capacity of the battery case 10.

Unlike the first stack module N1, the second bottom portion 200-2 of the second stack module N2 may not be welded to the side wall portion 100, but may be fastened to the module bracket portion L by a bolt fastening method or the like, such that structural rigidity may be reinforced.

Therefore, structural rigidity may be reinforced by removably fastening the second lower width-directional member 300-2, the second bottom portion 200-2, and the first stack module N1 in a state overlapping in the height direction (Z).

Specifically, a 2-1 lower width-directional member 300-2a of the second stack module N2, the second bottom portion 200-2 of the second stack module N2, and the first upper width-directional member 700-1 of the first stack module N1 may be removably fastened by a bolt fastening method in a state overlapping in the height direction (Z).

In a state in which the second bottom portion 200-2 and the 2-1 lower width-directional member 300-2a are welded to each other, the 2-1 lower width-directional member 300-2a, the second bottom portion 200-2, and the first upper width-directional member 700-1 may be additionally fastened by a bolt fastening method.

The first upper width-directional member 700-1, the second bottom portion 200-2, and the 2-1 lower width-directional member 300-2a may be disposed in the height direction (Z) from a lower side.

Although not illustrated, a plurality of second stack modules N2 may be installed in the height direction (Z) on the upper side of the first stack module N1. In this case, two second stack modules N2 to be stacked and connected in the height direction (Z) may also be connected therebetween. Specifically, the second upper width-directional member 700-2 of the second stack module N2 disposed on a lower side, the second bottom portion 200-2 of the second stack module N2 disposed on an upper side, and the 2-1 lower width-directional member 300-2a of the second stack module N2 disposed on an upper side may be connected by a bolt fastening method in a state disposed in the height direction (Z) .

The 2-1 lower width-directional member 300-2a may have a hat-shaped cross-section of which a lower portion is exposed, continuously provided as a plurality of hat-shaped cross-sections, and a 2-1 connecting surface 300-2a-1 may be formed between two hat-shaped cross sections. Coupling may be performed by a bolt fastening method in a state in which the second bottom portion 200-2 overlaps to contact a lower side of the 2-1 bottom portion 300-2a-1 and an upper side of the second upper width-directional member 700-2 overlaps to contact the lower side of the second bottom portion 200-2.

The 2-1 lower width-directional member 300-2a may have cross-sectional rigidity reinforced by a hat-shaped cross-section of which a lower portion is exposed, continuously provided as a plurality of hat-shaped cross-sections, and may be strongly coupled to the first stack module N1.

The second stack module N2 may further include a second length-directional member 400-2.

The second length-directional member 400-2 may be formed to extend in the length direction (X) across the reception space S, and may be installed to cover a plurality of second lower width-directional members 300-2. The second length-directional member 400-2 may be welded to the second bottom portion 200-2 and the plurality of second lower width-directed members 300-2.

The second length-directional member 400-2 may not be welded to the side wall portion 100, and may be detachably coupled to the side wall portion 100 via a connecting bracket (not illustrated). The connecting bracket (not illustrated) may be coupled to the side wall portion 100 and the second length-directional member 400-2 by a bolt fastening method or the like. The second length-directional member 400-2 may have a shorter length in the length direction (X) than the first length-directional member 400-1.

The second length-directional member 400-2 may include a second length-directional main body 410-2 and a second lower insertion groove 430-2.

The second length-directional main body 410-2 may be formed to extend in the length direction (X), and may be installed to cover upper portions of the plurality of second lower width-directional members 300-2.

The second lower insertion groove 430-2 may be formed to be inserted from a lower portion to an upper portion of the second length-directional main body 410-2, and the second lower width-directional member 300-2 may be inserted.

The lower side of the second length-directional member 400-2 may be welded to the second bottom portion 200-2, and may be welded to the second lower width-directional member 300-2 around the second lower insertion groove 430-2.

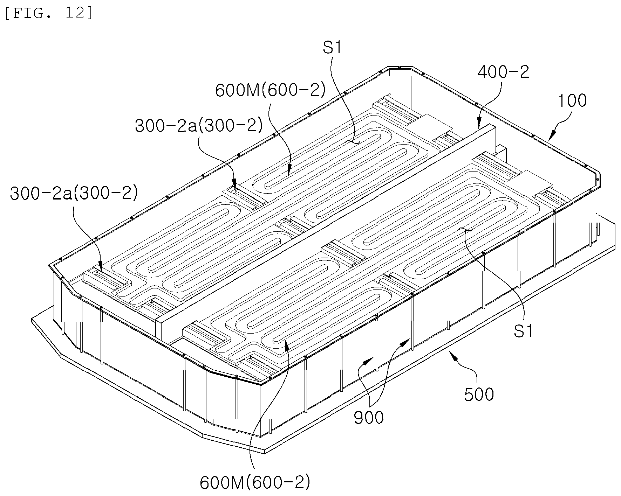

FIG. 12 is a perspective view illustrating a state in which a second cooling panel portion 600-2 is additionally installed in FIG. 10.

The battery case 10 may further include a second cooling panel portion 600-2.

The second cooling panel portion 600-2 may be installed on the upper side of the second lower width-directional member 300-2, and may cool the battery module M received in the reception space S.

The second cooling panel portion 600-2 may be composed of a plurality of unit cooling panels 600M disposed to be spaced apart in the width direction (Y). For example, the second cooling panel portion 600-2 may be composed of two unit cooling panels 600M, and the reception space S may be divided into two cooling spaces S1.

The second lower width-directional member 300-2 may include a 2-1 lower width-directional member 300-2a and a 2-2 lower width-directional member 300-2b.

The 2-1 lower width-directional member 300-2a may have a second installation groove 310-2 formed into an upper portion for installing the second cooling panel portion 600-2. The second installation groove 310-2 may serve to secure a space in which a cooling path of the second cooling panel portion 600-2 is formed.

The 2-2 lower width-directional member 300-2b may be disposed between adjacent 2-1 lower width-directional members 300-2a in the length direction (X). A plurality of 2-2 lower width-directional members 300-2b may be disposed to be spaced apart from each other in the length direction (X) between two adjacent 2-1 lower width-directional members 300-2a. For example, two 2-2 lower width-directional members 300-2b may be disposed between two adjacent 2-1 lower width-directional members 300-2a.

The 2-2 lower width-directional member 300-2b may have an upper end portion, equal to or less than a height of a lower end portion of the first cooling panel portion 600-1. In other words, the 1-2 lower width-directional member 300-1b may not interfere with the first cooling panel portion 600-1.

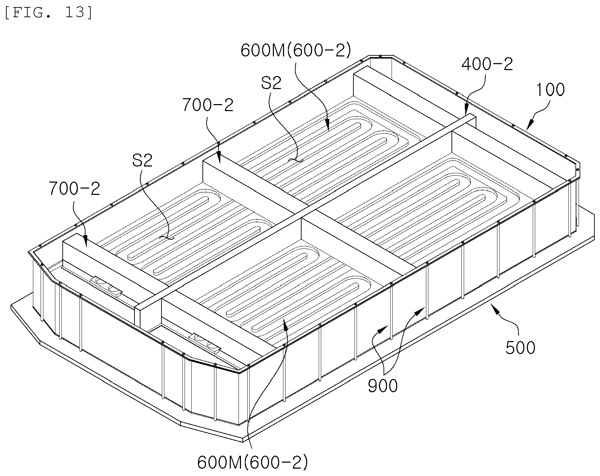

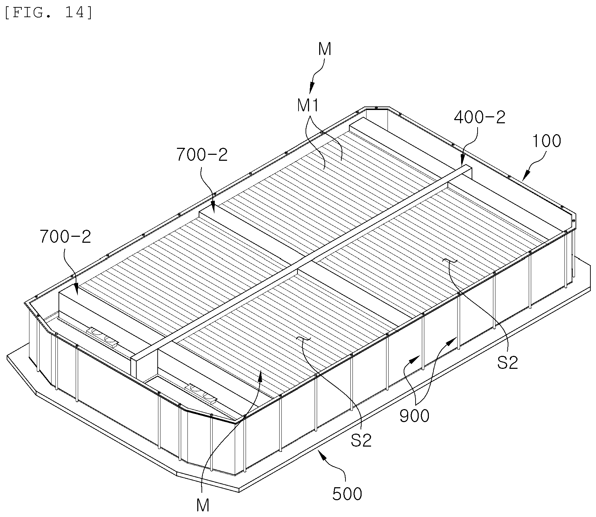

FIG. 13 is a perspective view illustrating a state in which a second upper width-directional member 700-2 is additionally installed in FIG. 12. FIG. 14 is a perspective view illustrating a state in which a battery module M is additionally installed in FIG. 13.

The battery case 10 may further include a second upper width-directional member 700-2.

The second upper width-directional member 700-2 may be disposed on an upper side of the second cooling panel portion 600-2, and may be combined with the 2-1 lower width-directional member 300-2a.

The second upper width-directional member 700-2 may be formed to extend in the width direction (Y), and may connect between the side wall portion 100 and the second length-directional member 400-2. In the second upper width-directional member 700-2, one end portion in the width direction (Y) may be connected to the side wall portion 100 and a connecting bracket E by means of a bolt fastening method, and the other end portion in the width direction (Y) may be connected to the second length-directional member 400-2 and the connecting bracket (E) by means of a bolt fastening method.

The battery case 10 of the present disclosure may improve production efficiency by utilizing common components by applying the same components to the first and second upper width-directional members.

Although embodiments of the present disclosure have been described in detail above, the scope of the rights of the present disclosure is not limited thereto, and will be obvious to those skilled in the art that various modifications and variations may be possible within a scope that does not depart from the technical idea of the present disclosure described in the claims.

### [Description of symbols]

10: Battery Case 100: Side Wall Portion
100a: First Side Wall Portion 100b: Second Side Wall Portion
100c: Front Wall Portion 100d: Rear Wall Portion
110: Side Panel 130: Upper Flange
150: Lower Flange 200-1: First Bottom Portion
200-2: Second Bottom Portion 300-1: First lower Width-Directional Member
300-1a: 1-1 Lower Width-Directional Member 300-1b: 1-2 Lower Width-Directional Member
300-2: Second Lower Width-Directional Member 300-2a: 2-1 Lower Width-Directional Member
300-2a-1: 2-1 Connecting Surface 300-2b: 2-2 Lower Width-Directional Member
310-1: First Installation Groove 310-2: Second Installation Groove
400-1: First Length-Directional Member 400-2: Second Length-Directional Member
410-1: First Length-Directional Main body 410-2: Second Length-Directional Main body
430-1: First Lower Insertion Groove 430-2: Second Lower Insertion Groove
500: Mount Frame 510: Upper Plate
530: Lower Plate 550: Side Plate
570: Exposed Portion 600-1: First Cooling Panel Portion
600-2: Second Cooling Panel Portion 600M: Unit Cooling Panel
700-1: First Upper Width-Directional Member 700-2: Second Upper Width-Directional Member
800: Sealing Portion 900: Mechanical Fastening Portion
910: Sleeve Member 930: Long Bolt Member
C1: Floor C2: Vehicle Body Frame
D: Closed Cross-Sectional Portion E: Connecting Bracket
L: Module Bracket Portion La: Module Joint Plate
Lb: Module Support Plate Lc: Separation Groove
M: Battery Module M1: Battery Cell
N: Stack module N1: First Stack module
N2: Second Stack module S: Reception Space
S1: Cooling Space S2: Compartment Space
X: Length Direction Y: Width Direction
Z: Height Direction

## Claims

1. A battery case comprising:
a side wall portion installed to surround a side surface of a reception space; and
a stack module receiving a battery module and installed to be stacked in plural in the reception space in a height direction,
wherein the stack module includes:
a first stack module connected to the side wall portion and installed to block a lower portion of the reception space; and
a second stack module at least one of which is disposed on an upper side of the first stack module.

2. The battery case of claim 1, wherein the first stack module includes:
a first bottom portion connected to the side wall portion and installed to block the lower portion of the reception space; and
a first lower width-directional member connected to the first bottom portion, extending in a width direction across the reception space, and installed in plural spaced apart in a length direction, and
wherein the first lower width-directional member is welded to the first bottom portion.

3. The battery case of claim 2, wherein the first stack module further includes a first length-directional member extending across the reception space in the length direction and installed to cover the plurality of first lower width-directional members, and
wherein the first length-directional member is welded to the first bottom portion and the plurality of first lower width-directional members.

4. The battery case of claim 3, wherein the side wall portion is welded to the first bottom portion, the first lower width-directional member, and the first length-directional member, respectively.

5. The battery case of claim 2, further comprising a first cooling panel portion installed on an upper side of the first lower width-directional member and cooling the battery module received in the reception space.

6. The battery case of claim 5, wherein the first lower width-directional member includes:
a 1-1 lower width-directional member having a first installation groove formed to be inserted from the upper portion for installing the first cooling panel portion; and
a 1-2 lower width-directional member disposed between adjacent first lower width-directional members in the length direction and having an upper end portion having a height, equal to or less than a height of a lower end portion of the first cooling panel portion.

7. The battery case of claim 6, further comprising a first upper width-directional member disposed on an upper side of the first cooling panel portion and coupled to the 1-1 lower width-directional member.

8. The battery case of claim 1, wherein the second stack module is detachably coupled to the first stack module and the side wall portion.

9. The battery case of claim 2, wherein the second stack module includes:
a second bottom portion disposed in a lower portion; and
a second lower width-directional member connected to the second bottom portion, formed to extend in a width direction across the reception space, and installed in plural spaced apart in a length direction, and
wherein the second lower width-directional member is welded to the second bottom portion.

10. The battery case of claim 9, wherein the first lower width-directional member has a height, greater than a height of the second lower width-directional member.

11. The battery case of claim 9, wherein the second lower width-directional member, the second bottom portion, and the first stack module are detachably coupled in a state overlapping in the height direction.

12. The battery case of claim 11, wherein a 2-1 lower width-directional member of the second lower width-directional member has a hat-shaped cross-section of which a lower portion is exposed, continuously provided as a plurality of hat-shaped cross-sections, and has a 2-1 connecting surface formed between two hat-shaped cross-sections of the plurality of hat-shaped cross-sections, and
the battery case is coupled by a bolt fastening method, in a state in which the second bottom portion overlaps to contact a lower side of the 2-1 connecting surface and an upper side of a first upper width-directional member of the first stack module overlaps to contact a lower side of the second bottom portion.

13. The battery case of claim 9, wherein the second stack module further includes a second length-directional member formed to extend in the length direction across the reception space and installed to cover the plurality of second lower width-directional members, and
wherein the second length-directional member is welded to the second bottom portion and the plurality of second lower width-directional members.

14. The battery case of claim 9, further comprising a second cooling panel portion installed on an upper side of the second lower width-directional member and cooling the battery module received in the reception space.

15. The battery case of claim 14, wherein the second lower width-directional member includes:
a 2-1 lower width-directional member having a second installation groove formed to be inserted from the upper portion for installing the second cooling panel portion; and
a 2-2 lower width-directional member disposed between adjacent 2-1 lower width-directional members in the length direction and having an upper end portion having a height, equal to or less than a height of a lower end portion of the second cooling panel portion.

16. The battery case of claim 15, further comprising a second upper width-directional member disposed on an upper side of the second cooling panel portion and coupled to the 2-1 lower width-directional member.

17. The battery case of claim 1, further comprising a module bracket portion connected to the side wall portion and detachably connected to the second stack module to support the second stack module.

18. The battery case of claim 17, wherein the module bracket portion includes:
a module joint plate welded in a state overlapping the side wall portion; and
a module support plate formed to extend in a direction, intersecting the module joint plate and detachably connected to a second bottom portion of the second stack module.

19. The battery case of claim 1, further comprising a mount frame coupled to the side wall portion and disposed outside the reception space to form a coupled portion with a vehicle body, and
wherein the mount frame is disposed in a position corresponding to the first stack module in the height direction.

20. The battery case of claim 19, wherein the mount frame is entirely installed to surround a side surface of the side wall portion.
